# EUROPEAN PATENT APPLICATION

(11) **EP 4 351 185 A1**
(43) Date of publication of application: **10.04.2024**
(21) Application number: 23809947.7
(22) Date of filing: 24.08.2023
(51) Int. Cl.: H04W 4/80

(54) **NETWORK DISTRIBUTION METHOD AND APPARATUS FOR ELECTRICAL APPARATUS, AND COMPUTER-READABLE STORAGE MEDIUM**

(30) Priority: 25.08.2022 CN 202211028421
(71) Applicant: Wuxi Little Swan Electric Co., Ltd., Wuxi, Jiangsu 214028 (CN)
(72) Inventor: JIN, Mingfu, Wuxi, Jiangsu 214028 (CN); SU, Zhongcheng, Wuxi, Jiangsu 214028 (CN); XUE, Chenxi, Wuxi, Jiangsu 214028 (CN); ZHANG, Huaizhou, Wuxi, Jiangsu 214028 (CN); ZHANG, Jie, Wuxi, Jiangsu 214028 (CN)
(74) Representative: Whitlock, Holly Elizabeth Ann
(86) International application number: PCT/CN2023/114779
(87) International publication number: WO 2024/041616

(57) **Abstract**

Provided are a network configuration method and apparatus for an electrical device and a computer-readable storage medium. The network configuration method includes: receiving (S1), in response to a target electrical device being powered on, a hotspot activation instruction from a user; transmitting (S2) the hotspot activation instruction to a to-be-connected electrical device through a base station, to cause the to-be-connected electrical device to enter an automatic network configuration phase; receiving (S3) a network connection instruction transmitted by a terminal device, in which the network connection instruction includes wireless network identifier and a corresponding password; and transmitting (S4) the wireless network identifier and the corresponding password to the to-be-connected electrical device through the base station after the target electrical device has been successfully connected to a network based on the wireless network identifier and the corresponding password, to enable the to-be-connected electrical device to connect to a network based on the wireless network identifier and the corresponding password.

## Description

### CROSS-REFERENCE TO RELATED APPLICATION

This application claims priority to Chinese Patent Application No. 202211028421.6, entitled "NETWORK CONFIGURATION METHOD AND APPARATUS FOR ELECTRICAL DEVICE AND COMPUTER-READABLE STORAGE MEDIUM," filed on August 25, 2022, the entire content of which is incorporated herein by reference.

### FIELD

The present disclosure relates to the technical field of household appliances, and more particularly, to an electrical device network configuration method, an electrical device network configuration apparatus, a computer-readable storage medium, and a household appliance.

### BACKGROUND

A network configuration process for a household appliance is performed by scanning codes, selecting models, self-discovery, Near Field Communication (NFC) card tapping, and the like. When a network connection operation is performed on a plurality of household appliances, a user needs to perform the network configuration operation on each of the household appliances. The network configuration process is cumbersome, leading to substantial network configuration workload and ultimately diminishing user experience.

### SUMMARY

The present disclosure aims to at least solve one of the technical problems in the related art to some extent. To this end, an embodiment of the present disclosure is to provide an electrical device network configuration method, that can simultaneously realize network connections of a target electrical device and a to-be-connected electrical device, which solves a problem that network connection operations in multiple times are cumbersome. Therefore, network connection steps are simplified, and user experience is improved.

An embodiment of the present disclosure is to provide an electrical device network configuration apparatus.

An embodiment of the present disclosure is to provide a computer-readable storage medium.

An embodiment of the present disclosure is to provide a household appliance.

Embodiments of a first aspect of the present disclosure provide an electrical device network configuration method. The network configuration method includes: receiving, in response to a target electrical device being powered on, a hotspot activation instruction from a user; transmitting the hotspot activation instruction to a to-be-connected electrical device through a base station, to cause the to-be-connected electrical device to enter an automatic network configuration phase; receiving a network connection instruction transmitted by a terminal device, in which the network connection instruction includes wireless network identifier and a corresponding password; and transmitting the wireless network identifier and the corresponding password to the to-be-connected electrical device through the base station after the target electrical device has been successfully connected to a network based on the wireless network identifier and the corresponding password, to enable the to-be-connected electrical device to connect to a network based on the wireless network identifier and the corresponding password.

With the electrical device network configuration method according to the embodiments of the present disclosure, firstly, when the target electrical device is powered on, the hotspot activation instruction from the user is received. Moreover, the hotspot activation instruction is transmitted to the to-be-connected electrical device through the base station, to cause the to-be-connected electrical device to enter the automatic network configuration phase. Then, the network connection instruction transmitted by the terminal device is received. The network connection instruction includes the wireless network identifier and the corresponding password. Finally, the wireless network identifier and the corresponding password are transmitted to the to-be-connected electrical device through the base station after the target electrical device has been successfully connected to a network based on the wireless network identifier and the corresponding password, to enable the to-be-connected electrical device to connect to a network based on the wireless network identifier and the corresponding password. Therefore, the method can realize the network connections of the target electrical device and the electrical device to be network-connected simultaneously, and solve the problem that the network connection operations in multiple times are cumbersome. In addition, the method simplifies the network connection steps and improves the user experience.

In addition, the electrical device network configuration method according to the above embodiments of the present disclosure may further have the following additional technical features.

According to an embodiment of the present disclosure, said receiving the hotspot activation instruction from the user includes determining, in response to detecting and identifying that a network configuration button of the target electrical device is activated, that the hotspot activation instruction from the user is received.

According to an embodiment of the present disclosure, the network configuration button is used to instruct the target electrical device and the to-be-connected electrical device to be network configured cooperatively.

According to an embodiment of the present disclosure, the method further includes determining, in absence of hotspot activation instruction from the user, to automatically activate a hotspot when the target electrical device is powered on.

According to an embodiment of the present disclosure, the base station and at least one to-be-connected electrical device perform data interaction with each other by means of wireless or Bluetooth communication, and the target electrical device and the base station perform data interaction with each other by means of wired or wireless communication.

According to an embodiment of the present disclosure, the base station has a one-to-one correspondence with the at least one to-be-connected electrical device.

According to an embodiment of the present disclosure, the target electrical device is a laundry treatment device, the to-be-connected electrical device is a sweeper, and the base station is a sweeper base station.

According to an embodiment of the present disclosure, the laundry treatment device is fixedly connected to the sweeper base station, or the sweeper base station is disposed inside the laundry treatment device.

Embodiments of a second aspect of the present disclosure provide an electrical device network configuration apparatus, which includes a first receiving module, a first transmitting module, a second receiving module, and a second transmitting module. The first receiving module is configured to receive, in response to a target electrical device being powered on, a hotspot activation instruction from a user. The first transmitting module is configured to transmit the hotspot activation instruction to a to-be-connected electrical device through a base station, to cause the to-be-connected electrical device to enter an automatic network configuration phase. The second receiving module is configured to receive a network connection instruction transmitted by a terminal device. The network connection instruction includes wireless network identifier and a corresponding password. The second transmitting module is configured to transmit the wireless network identifier and the corresponding password to the to-be-connected electrical device through the base station after the target electrical device has been successfully connected to a network based on the wireless network identifier and the corresponding password, to enable the to-be-connected electrical device to connect to a network based on the wireless network identifier and the corresponding password.

With the electrical device network configuration apparatus according to the embodiments of the present disclosure, the hotspot activation instruction from the user is received by the first receiving module in response to the target electrical device being powered on. The first transmitting module transmits the hotspot activation instruction to the to-be-connected electrical device through the base station, to cause the to-be-connected electrical device to enter the automatic network configuration phase. The network connection instruction transmitted by the terminal device is received by the second receiving module. The network connection instruction includes the wireless network identifier and the corresponding password. The second transmitting module transmits the wireless network identifier and the corresponding password to the to-be-connected electrical device through the base station after the target electrical device has been successfully connected to a network based on the wireless network identifier and the corresponding password, to enable the to-be-connected electrical device to connect to a network based on the wireless network identifier and the corresponding password. Therefore, the apparatus can realize the network connections of the target electrical device and the electrical device to be network-connected concurrently, thereby solving the problem that network connection operations in multiple times are cumbersome. In addition, the apparatus simplifies the network connection steps and improves the user experience.

Embodiments of a third aspect of the present disclosure provide a computer-readable storage medium. The computer-readable storage medium stores an electrical device network configuration program. The electrical device network configuration program, when executed by a processor, implements the electrical device network configuration method as described above.

According to the computer-readable storage medium of the embodiments of the present disclosure, the network connections of the target electrical device and the electrical device to be network-connected can be realized simultaneously based on the electrical device network configuration method as described above, thereby solving the problem of tedious network connection operations in multiple times. As a result, the network connection steps are simplified. The user experience is improved.

Embodiments of a fourth aspect of the present disclosure provide a household appliance. The household appliance includes a memory, a processor, and an electrical device network configuration program stored on the memory and executable by the processor. The processor, when executing the electrical device network configuration program, implements the electrical device network configuration method as described above.

With the household appliance according to the embodiments of the present disclosure, the network connections of the target electrical device and the electrical device to be network-connected can be realized simultaneously based on the electrical device network configuration method as described above. In this way, the problem of tedious network connection operations in multiple times is solved. Moreover, the network connection steps are simplified, and the user experience is improved.

Additional aspects and advantages of the present disclosure will be provided at least partially in the following description, will become apparent partially from the following description, or can be learned from practicing of the present disclosure.

### BRIEF DESCRIPTION OF THE DRAWINGS

FIG. 1 is a flowchart of an electrical device network configuration method according to an embodiment of the present disclosure.
FIG. 2 is a remote operation interface of an application program according to an embodiment of the present disclosure.
FIG. 3 is a flowchart of an electrical device network configuration method according to another embodiment of the present disclosure.
FIG. 4 is a block diagram of an electrical device network configuration apparatus according to an embodiment of the present disclosure.
FIG. 5 is a block diagram of a household appliance according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions are denoted by same or similar reference numerals. The embodiments described below with reference to the drawings are illustrative only, and are intended to explain, rather than limiting, the present disclosure.

An electrical device network configuration method, an electrical device network configuration apparatus, a computer-readable storage medium and a household appliance according to the embodiments of the present disclosure will be described below with reference to the drawings.

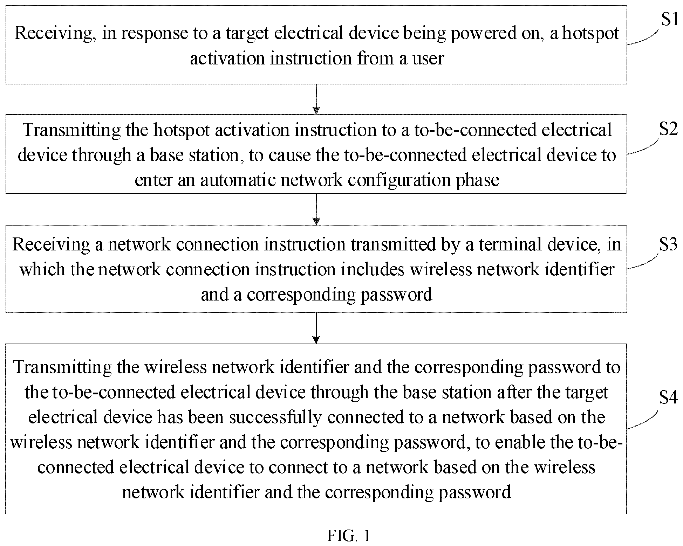

FIG. 1 is a flowchart of an electrical device network configuration method according to an embodiment of the present disclosure. The electrical device may be a washing machine, a refrigerator, an air conditioner, and the like.

As illustrated in FIG. 1, an electrical device network configuration method according to an embodiment of the present disclosure includes actions at blocks S1 to S4.

At block S 1, a hotspot activation instruction from a user is received in response to a target electrical device being powered on.

At block S2, the hotspot activation instruction is transmitted to a to-be-connected electrical device through a base station, to cause the to-be-connected electrical device to enter an automatic network configuration phase.

At block S3, a network connection instruction transmitted by a terminal device is received. The network connection instruction includes wireless network identifier and a corresponding password.

At block S4, the wireless network identifier and the corresponding password are transmitted to the to-be-connected electrical device through the base station after the target electrical device has been successfully connected to a network based on the wireless network identifier and the corresponding password, to enable the to-be-connected electrical device to connect to a network based on the wireless network identifier and the corresponding password.

The target electrical device and the to-be-connected electrical device may be configured based on actual situations. In an embodiment of the present disclosure, the target electrical device is a laundry treatment device. The to-be-connected electrical device is a sweeper. The base station is a sweeper base station. The laundry treatment device may be a washing machine, a dryer, a clothes care cabinet, and the like.

In the following, the electrical device network configuration method is described through an example of taking the target electrical device as a washing machine with a display screen, the to-be-connected electrical device as a sweeper, and the base station as a sweeper base station.

In some embodiments, once the washing machine is powered on, the user may initiate the hotspot activation instruction to the washing machine by long-pressing a hotspot activation button on the display screen of the washing machine, control a WIFI (Wi-Fi, wireless network communication technology) module of the washing machine to initiate access to a hotspot. Moreover, the hotspot activation instruction is forwarded to the sweeper through the sweeper base station. In this way, the sweeper is controlled to enter the automatic network configuration phase.

When the washing machine receives the hotspot activation instruction from the user and controls the WIFI module of the washing machine to initiate access to the hotspot, the washing machine establishes a local area network connection with the terminal device after entering a SoftAP (Wireless Soft AP) mode. After the user inputs router service set identifier (SSID) and a corresponding password in the terminal device, the terminal device transmits the router SSID and the password to the washing machine through the established local area network. The washing machine switches to a client mode, and connects to a corresponding router based on the received router SSID and the password. After the washing machine is successfully connected to a network, the router SSID and the password are transmitted to the sweeper base station. The sweeper base station forwards the router SSID and the password to the sweeper in the automatic network configuration phase. At this time, the sweeper connects to a corresponding wireless network based on the router SSID and the password. In this way, the method can complete network connections of the target electrical device and the to-be-connected electrical device through operations on the target electrical device. Therefore, a problem that a network connection operation of a plurality of electrical devices is cumbersome is solved. Moreover, network connection steps are simplified, and user experience is improved.

It should be noted that a manner of initiating the hotspot activation instruction to the target electrical device, rather than the above control on the control button, may also be triggered in a manner such as remote control of a bound mobile terminal and NFC identifier, which in an exemplary embodiment may be configured based on actual situations and is not limited herein. In addition, the above mobile terminal may be a mobile phone, a notebook computer, a tablet computer, and the like.

In an embodiment of the present disclosure, the laundry treatment device is fixedly connected to the sweeper base station, or the sweeper base station is disposed inside the laundry treatment device. That is, the sweeper base station may be disposed outside the laundry treatment device, and be fixedly connected to the laundry treatment device through a connection wire to perform data interaction. In addition, the sweeper base station may be disposed inside a housing of the laundry treatment device, and be connected to the laundry treatment device through an internal connection wire.

In an embodiment of the present disclosure, the receiving the hotspot activation instruction from the user includes determining, in response to detecting and identifying that a network configuration button of the target electrical device is activated, that the hotspot activation instruction from the user is received.

In this embodiment, after the target electrical device is powered on, the user presses the network configuration button of the target electrical device. When the target electrical device detects that the network configuration button has been activated, the hotspot activation instruction from the user is determined to be received. Moreover, the to-be-connected electrical device is controlled through the base station to enter the automatic network configuration phase.

According to an embodiment of the present disclosure, the network configuration button is used to instruct the target electrical device and the to-be-connected electrical device to be network configured cooperatively.

In this embodiment, the network configuration button can perform control on network connection states of the target electrical device and the to-be-connected electrical device concurrently. In some embodiments, the example to continue with is where the target electrical device is a washing machine, the to-be-connected electrical device is a sweeper, and the base station is a sweeper base station. When the user activates the network configuration button of the washing machine, on the one hand, the washing machine is controlled to activate a hotspot to make it enter the network configuration phase, and on the other hand, the sweeper is allowed to enter the network configuration phase through the sweeper base station. When the user does not activate the network configuration button of the target electrical device, the washing machine and the sweeper determine whether to perform a network configuration operation based on their respectively received control signals.

In an embodiment of the present disclosure, a hotspot is determined, in absence of hotspot activation instruction from the user, to be automatically activated when the target electrical device is powered on.

In some embodiments, a current state of the washing machine is identified in response to the washing machine receiving no hotspot activation instruction from the user. When it is determined that the washing machine is in a power-on state, the WIFI module of the washing machine is automatically controlled to initiate access to a hotspot, enter the SoftAP mode, and establish the local area network connection with the terminal device. At this time, after the user inputs the router SSID and the corresponding password in the terminal device, the terminal device transmits the router SSID and the password to the washing machine. The washing machine can be connected to a corresponding router based on the router SSID and the password. In this case, when the target electrical device is powered on, the target electrical device automatically activates a hotspot and enters a network connection phase without affecting the to-be-connected electrical device.

It should be noted that, a communication mode between the base station and the target electrical device and a communication mode between the base station and the to-be-connected electrical device may be selected based on actual situations. According to an embodiment of the present disclosure, the base station and at least one to-be-connected electrical device perform data interaction with each other by means of wireless or Bluetooth communication, and the target electrical device and the base station perform data interaction with each other by means of wired or wireless communication.

In this embodiment, a plurality of electrical devices to be network-configured may be provided. For example, the electrical devices to be network-configured are three sweepers, including a sweeper A, a sweeper B, and a sweeper C. After completing the network configuration based on the wireless network identifier and the corresponding password, the washing machine transmits the wireless network identifier and the corresponding password to the sweeper base station by means of wireless or wireless communication. The sweeper base station forwards the received wireless network identifier and corresponding password to the sweeper A, the sweeper B, and the sweeper C by means of wireless or Bluetooth communication. The sweeper A, the sweeper B and the sweeper C complete the network configuration based on the received wireless network identifier and corresponding password, and forward network configuration success information and identity identifier information to the washing machine through the sweeper base station. Therefore, the method can complete a network configuration operation on the plurality of electrical devices to be network-configured simultaneously, thereby achieving network connections of the plurality of electrical devices once for all.

It should be further noted that at least one base station may be provided, which may be provided based on actual situations.

According to an embodiment of the present disclosure, the base station has a one-to-one correspondence with the at least one to-be-connected electrical device.

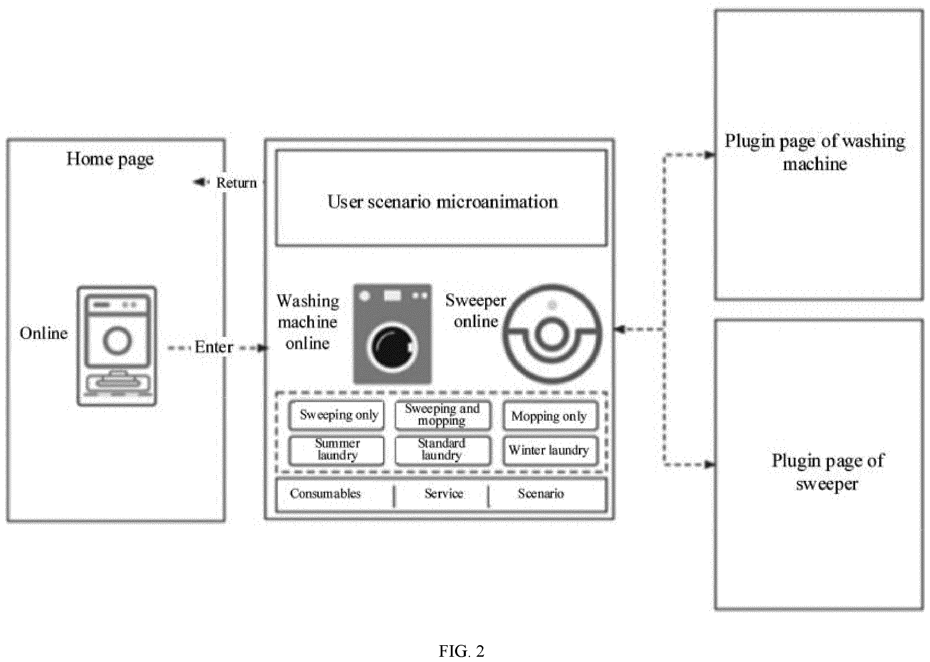

In this embodiment, each of the at least one to-be-connected electrical device is equipped with one base station. As an example, the at least one to-be-connected electrical device includes the sweeper A, the sweeper B, and the sweeper C. In this case, the base stations include a sweeper base station A corresponding to the sweeper A, a sweeper base station B corresponding to the sweeper B, and a sweeper base station C corresponding to the sweeper C. The washing machine serving as the target electrical device establishes communication connections with the sweeper base station A, the sweeper base station B, and the sweeper base station C through data wires. A pairing connection between the sweeper base station A and the sweeper A, a pairing connection between the sweeper base station B and the sweeper B and a pairing connection between the sweeper base station C and the sweeper C are achieved via Bluetooth, respectively. The successfully paired washing machine transmits the wireless network identifier and the corresponding password to the sweeper base station A, the sweeper base station B, and the sweeper base station C. The sweeper base station A, the sweeper base station B and the sweeper base station C respectively transmit the wireless network identifier and the corresponding password to the sweeper A, the sweeper B, and the sweeper C by means of Bluetooth. After completing the network configuration based on the received wireless network identifier and the corresponding password, the sweeper A transmits its network configuration success information and its SN code to the sweeper base station A via Bluetooth, and the sweeper base station A forwards distribution success information of and the SN code of the sweeper A to the washing machine through a data wire. The washing machine receives and identifies the network configuration success information and the SN code of the sweeper A, to determine successful network configuration of the sweeper A. This process continues until the washing machine determines that the sweeper B and the sweeper C are both successfully configured with a network and network configuration of all the electrical devices to be network-configured is determined to be completed. Otherwise, it is determined that the network configuration of the electrical devices to be network-configured is uncompleted. Further, the example to continue with is where the target electrical device is a washing machine and the to-be-connected electrical device is a sweeper. The present disclosure may allow common functions of the washing machine and the sweeper to share one card page through a remote operation interface of an application program installed on a mobile terminal as illustrated in FIG. 2. In this way, main functions of the two electrical devices can be controlled on one interface. Moreover, after-sales service, consumable management and the like can be performed. Referring to FIG. 2, online household appliances are displayed through a home page of the application program. Moreover, electrical devices including the washing machine and the sweeper are shown online through a user scenario micro-animation interface. Control options for the washing machine are respectively and correspondingly displayed, i.e., summer laundry, standard laundry, and winter laundry. In addition, control options for the sweeper are respectively and correspondingly displayed, i.e., sweeping only, sweeping and mopping, mopping only, and consumables, services and scenarios options are displayed underneath the control options for the sweeper. Therefore, the user can control the washing machine and the sweeper directly through one application program.

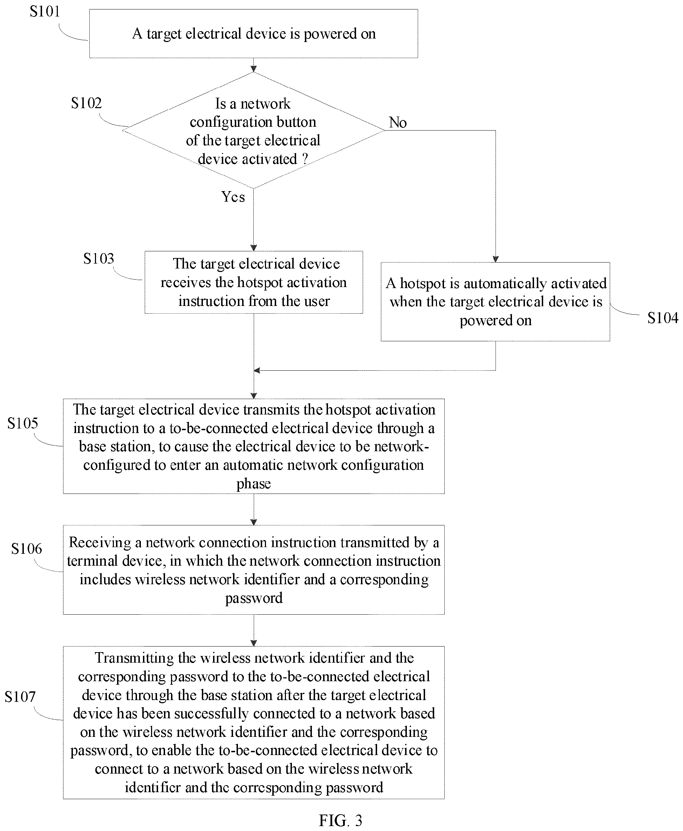

In an exemplary embodiment of the present disclosure, as illustrated in FIG. 3, the electrical device network configuration method may include actions S101 to S107.

At block S101, the target electrical device is powered on.

At block S102, it is determined whether the network configuration button of the target electrical device is activated. An operation at block S103 is performed in response to the network configuration button of the target electrical device being activated. An operation at block S104 is performed in response to the network configuration button of the target electrical device being not activated.

At block S103, the target electrical device receives the hotspot activation instruction from the user, and an operation at block S105 is performed.

At block S104, the target electrical device automatically activates the hotspot when the target electrical device is powered on, and the operation at block S105 is performed.

At block S105, the target electrical device transmits the hotspot activation instruction to the to-be-connected electrical device through the base station, to cause the to-be-connected electrical device to enter the automatic network configuration phase.

At block S106, the target electrical device receives the network connection instruction transmitted by the terminal device. The network connection instruction includes the wireless network identifier and the corresponding password.

At block S 107, the wireless network identifier and the corresponding password are transmitted to the to-be-connected electrical device through the base station after the target electrical device has been successfully connected to a network based on the wireless network identifier and the corresponding password, to enable the to-be-connected electrical device to connect to a network based on the wireless network identifier and the corresponding password.

In conclusion, with the electrical device network configuration method according to the embodiments of the present disclosure, when the target electrical device is powered on, the hotspot activation instruction from the user is received. Moreover, the hotspot activation instruction is transmitted to the to-be-connected electrical device through the base station, to cause the to-be-connected electrical device to enter the automatic network configuration phase. Then, the network connection instruction transmitted by the terminal device is received. The network connection instruction includes the wireless network identifier and the corresponding password. Finally, the wireless network identifier and the corresponding password are transmitted to the to-be-connected electrical device through the base station after the target electrical device has been successfully connected to a network based on the wireless network identifier and the corresponding password, to enable the to-be-connected electrical device to connect to a network based on the wireless network identifier and the corresponding password. Therefore, the method can realize the network connections of the target electrical device and the electrical device to be network-connected simultaneously, and solve the problem that network connection operations in multiple times are cumbersome. In addition, the method simplifies the network connection steps and improves the user experience.

Corresponding to the above embodiments, the present disclosure further provides an electrical device network configuration apparatus.

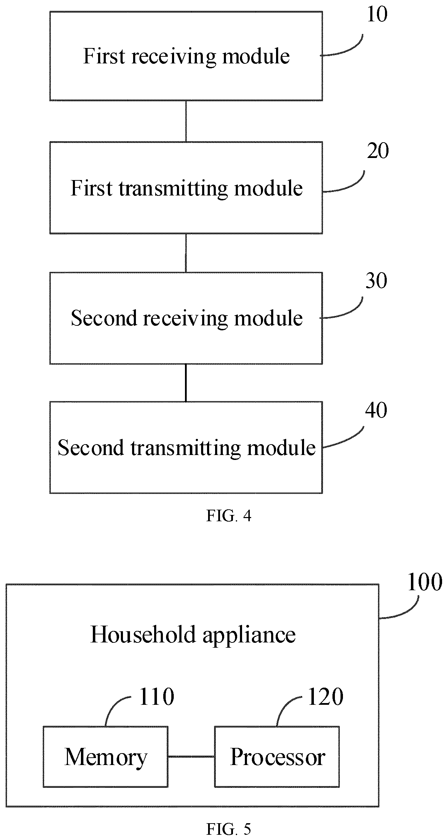

As illustrated in FIG. 4, the electrical device network configuration apparatus according to embodiments of the present disclosure includes a first receiving module 10, a first transmitting module 20, a second receiving module 30, and a second transmitting module 40.

The first receiving module 10 is configured to receive, in response to a target electrical device being powered on, a hotspot activation instruction from a user. The first transmitting module 20 is configured to transmit the hotspot activation instruction to a to-be-connected electrical device through a base station, to cause the to-be-connected electrical device to enter an automatic network configuration phase. The second receiving module 30 is configured to receive a network connection instruction transmitted by a terminal device. The network connection instruction includes wireless network identifier and a corresponding password. The second transmitting module 40 is configured to transmit the wireless network identifier and the corresponding password to the to-be-connected electrical device through the base station after the target electrical device has been successfully connected to a network based on the wireless network identifier and the corresponding password, to enable the to-be-connected electrical device to connect to a network based on the wireless network identifier and the corresponding password.

According to an exemplary embodiment of the present disclosure, the first receiving module 10 is configured to, when receiving the hotspot activation instruction from the user, determine that the hotspot activation instruction from the user is received, in response to detecting and identifying that a network configuration button of the target electrical device is activated.

According to an embodiment of the present disclosure, the network configuration button is used to instruct the target electrical device and the to-be-connected electrical device to be network configured cooperatively.

According to an embodiment of the present disclosure, the first receiving module 10 is configured to determine, in absence of hotspot activation instruction from the user, to automatically activate a hotspot when the target electrical device is powered on.

According to an embodiment of the present disclosure, the base station and at least one to-be-connected electrical device perform data interaction with each other by means of wireless or Bluetooth communication, and the target electrical device and the base station perform data interaction with each other by means of wired or wireless communication.

According to an embodiment of the present disclosure, the base station has a one-to-one correspondence with the at least one to-be-connected electrical device.

According to an embodiment of the present disclosure, the target electrical device is a laundry treatment device, the to-be-connected electrical device is a sweeper, and the base station is a sweeper base station.

According to an embodiment of the present disclosure, the laundry treatment device is fixedly connected to the sweeper base station, or the sweeper base station is disposed inside the laundry treatment device.

It should be noted that, details that are not disclosed in the electrical device network configuration apparatus of the embodiments of the present disclosure are referred to the details disclosed in the network configuration method for the electrical apparatus according to the above embodiments of the present disclosure, and therefore will be omitted herein.

With the electrical device network configuration apparatus according to the embodiments of the present disclosure, the hotspot activation instruction from the user is received by the first receiving module in response to the target electrical device being powered on. The first transmitting module transmits the hotspot activation instruction to the to-be-connected electrical device through the base station, to cause the to-be-connected electrical device to enter the automatic network configuration phase. The network connection instruction transmitted by the terminal device is received by the second receiving module. The network connection instruction includes the wireless network identifier and the corresponding password. The second transmitting module transmits the wireless network identifier and the corresponding password to the to-be-connected electrical device through the base station after the target electrical device has been successfully connected to a network based on the wireless network identifier and the corresponding password, to enable the to-be-connected electrical device to connect to a network based on the wireless network identifier and the corresponding password. Therefore, the apparatus can realize the network connections of the target electrical device and the electrical device to be network-connected concurrently, thereby solving the problem that network connection operations in multiple times are cumbersome. In addition, the apparatus simplifies the network connection steps and improves the user experience.

Corresponding to the above embodiments, the present disclosure further provides a computer-readable storage medium.

The computer-readable storage medium according to the embodiments of the present disclosure stores an electrical device network configuration program. The electrical device network configuration program, when executed by a processor, implements the electrical device network configuration method as described above.

According to the computer-readable storage medium of the embodiments of the present disclosure, based on the above electrical device network configuration method, the network connections of the target electrical device and the electrical device to be network-connected can be realized simultaneously, thereby solving the problem that network connection operations in multiple times are cumbersome. As a result, the network connection steps are simplified. The user experience is improved.

Corresponding to the above embodiments, the present disclosure further provides a household appliance.

As illustrated in FIG. 5, the household appliance 100 according to an embodiment of the present disclosure includes a memory 110, a processor 120, and an electrical device network configuration program stored on the memory 110 and executable by the processor 120. The processor 120 is configured to, when executing the electrical device network configuration program, implement the electrical device network configuration method as described above.

With the household appliance according to the embodiments of the present disclosure, based on the electrical device network configuration method as described above, the network connections of the target electrical device and the electrical device to be network-connected can be realized simultaneously. In this way, the problem that network connection operations in multiple times are cumbersome is solved. Moreover, the network connection steps are simplified, and the user experience is improved.

It should be noted that, in an exemplary embodiment, the logic and/or steps described in other manners herein or illustrated in the flowchart, for example, a particular sequence table of executable instructions for realizing the logical function, may be realized in any computer readable medium to be used by the instruction execution system, device or equipment (such as, a system based on computers, a system including processors or other systems capable of obtaining instructions from the instruction execution system, device and equipment and executing the instructions), or to be used in combination with the instruction execution system, device and equipment. As to the specification, "computer readable medium" may be any device adaptive for including, storing, communicating, propagating, or transferring programs to be used by or in combination with the instruction execution system, device, or equipment. More exemplary examples of the computer readable medium include, but are not limited to, an electronic connection (an electronic device) with at least one wire, a portable computer disk case (a magnetic device), a random access memory (RAM), a read only memory (ROM), an erasable programmable read-only memory (EPROM or a flash memory), an optical fiber device, and a portable compact disk read-only memory (CDROM). In addition, the computer readable medium may even be a paper or other appropriate medium capable of being printed with programs thereon, this is because, for example, the paper or other appropriate medium may be optically scanned and then edited, decrypted or processed with other appropriate methods when necessary to obtain the programs in an electric manner. The programs may be then stored in a memory of a computer.

It should be understood that each part of the present disclosure may be realized by hardware, software, firmware or their combination. In the above implementations, a plurality of steps or methods may be realized by the software or firmware stored in a memory and executed by an appropriate instruction execution system. For example, if it is realized by hardware, likewise in another implementation, the steps or methods may be realized by any one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), and the like.

In the description of this specification, descriptions with reference to the terms "an embodiment", "some embodiments", "examples", "specific examples", "some examples" or the like mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "a plurality of" means at least two, unless otherwise specifically defined.

In the present disclosure, unless otherwise clearly specified and limited, terms such as "installation", "connection", "connected to", "fixed" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

Although embodiments according to the present disclosure have been shown and described, it would be appreciated by those skilled in the art that the above embodiments are illustrative and cannot be construed to limitation on the present disclosure, and changes, alternatives, modifications and variations may be made in the embodiments without departing from the scope of the present disclosure.

## Claims

1. An electrical device network configuration method, comprising:
receiving, in response to a target electrical device being powered on, a hotspot activation instruction from a user;
transmitting the hotspot activation instruction to a to-be-connected electrical device through a base station, to cause the to-be-connected electrical device to enter an automatic network configuration phase;
receiving a network connection instruction transmitted by a terminal device, wherein the network connection instruction comprises wireless network identifier and a corresponding password; and
transmitting the wireless network identifier and the corresponding password to the to-be-connected electrical device through the base station after the target electrical device has been successfully connected to a network based on the wireless network identifier and the corresponding password, to enable the to-be-connected electrical device to connect to a network based on the wireless network identifier and the corresponding password.

2. The method according to claim 1, wherein said receiving the hotspot activation instruction from the user comprises:
determining, in response to detecting and identifying that a network configuration button of the target electrical device is activated, that the hotspot activation instruction from the user is received.

3. The method according to claim 2, wherein the network configuration button is used to instruct the target electrical device and the to-be-connected electrical device to be network configured cooperatively.

4. The method according to any one of claims 1 to 3, further comprising:
determining, in absence of hotspot activation instruction from the user, to automatically activate a hotspot when the target electrical device is powered on.

5. The method according to any one of claims 1 to 4, wherein:
the base station and at least one to-be-connected electrical device perform data interaction with each other by means of wireless or Bluetooth communication; and
the target electrical device and the base station perform data interaction with each other by means of wired or wireless communication.

6. The method according to claim 5, wherein:
the base station has a one-to-one correspondence with the at least one to-be-connected electrical device.

7. The method according to any one of claims 1 to 6, wherein:
the target electrical device is a laundry treatment device;
the to-be-connected electrical device is a sweeper; and
the base station is a sweeper base station.

8. The method according to claim 7, wherein:
the laundry treatment device is fixedly connected to the sweeper base station; or
the sweeper base station is disposed inside the laundry treatment device.

9. An electrical device network configuration apparatus, comprising:
a first receiving module configured to receive, in response to a target electrical device being powered on, a hotspot activation instruction from a user;
a first transmitting module configured to transmit the hotspot activation instruction to a to-be-connected electrical device through a base station, to cause the to-be-connected electrical device to enter an automatic network configuration phase;
a second receiving module configured to receive a network connection instruction transmitted by a terminal device, wherein the network connection instruction comprises wireless network identifier and a corresponding password; and
a second transmitting module configured to transmit the wireless network identifier and the corresponding password to the to-be-connected electrical device through the base station after the target electrical device has been successfully connected to a network based on the wireless network identifier and the corresponding password, to enable the to-be-connected electrical device to connect to a network based on the wireless network identifier and the corresponding password.

10. A computer-readable storage medium, storing an electrical device network configuration program, wherein the electrical device network configuration program, when executed by a processor, implements the electrical device network configuration method according to any one of claims 1 to 8.

11. A household appliance, comprising:
a memory;
a processor; and
an electrical device network configuration program stored on the memory and executable by the processor, wherein the processor, when executing the electrical device network configuration program, implements the electrical device network configuration method according to any one of claims 1 to 8.
